# EUROPÄISCHE PATENTANMELDUNG

(11) **EP 1 873 428 A1**
(43) Veröffentlichungstag der Anmeldung: **02.01.2008**
(21) Anmeldenummer: 06116332.5
(22) Anmeldetag: 29.06.2006
(51) Int. Cl.: F16J 15/32, F16J 15/34, B62D 7/02, F16C 19/16, F16C 33/78, F16C 19/18, F16C 17/10, F16C 33/74

(54) **Drehkranz mit verminderter Wartungsanforderung**

(71) Anmelder: Mannstaedt-Werke GmbH & Co. KG, 53840 Troisdorf (DE)
(72) Erfinder: Philipp, Franz-Dieter, Dr., 53840 Troisdorf (DE); Skupin, Martin, 53840 Troisdorf (DE)
(74) Vertreter: Bungartz, Klaus Peter

(57) **Zusammenfassung**

Die Erfindung betrifft einen Drehkranz mit verminderter Wartungsanforderung, der einen Unterring (2) und einen über ein Kranzlager (3) auf dem Unterring (2) gelagerten Oberring (1) aufweist, wobei das Kranzlager (3) in einem Lagerraum (4) angeordnet ist, der zumindest über eine erste Dichtung (5) und eine zweite Dichtung (6) gegen die Umgebung abgedichtet ist.

Die bekannten Drehkränze erfordern nach einer bestimmten Betriebsdauer eine Wartungsmaßnahme. Dies verzögert oder verhindert der neue Drehkranz dadurch, dass die erste Dichtung (6) eine bidirektionale Dichtung sowohl gegen den Eintritt eines Fremdkörpers in den Lagerraum (4) als auch gegen den Austritt eines Mediums, insbesondere eines Lagerfettes, aus dem Lagerraum (4) umfasst und dass die Dichtungen aus einem thermoplastischen Polyurethan gefertigt sind.

## Beschreibung

### Technisches Gebiet

Die Erfindung betrifft einen Drehkranz mit verminderter Wartungsanforderung mit einem Unterring und einem über ein Kranzlager auf dem Unterring gelagerten Oberring, wobei das Kranzlager in einem Lagerraum angeordnet ist, der zumindest über eine erste Dichtung und eine zweite Dichtung gegen die Umgebung abgedichtet ist.

### Stand der Technik

Ein Drehkranz dieser Art ist aus der DE 816056 C bekannt. Der bekannte Drehkranz weist ein Kranzlager auf, das zweireihig ausgebildet ist, wobei ein oberer und ein unterer Wälzlagerkranz vorgesehen sind. Beide Lagerkränze sind in einem im Wesentlichen spaltförmigen Lagerraum untergebracht, der zur Aufnahme der Wälzkörper an den Positionen der Lagerkränze vergrößert ist.

Derartige Lagerkränze können vielfältig eingesetzt werden. Sie werden beispielsweise als Lenkkränze für Fahrzeuge mit einem Gespannzug eingesetzt. Sie können aber auch bei allen anderen Lagerproblemen Verwendung finden, etwa in der Antriebstechnik, wo zum Beispiel der Rotor eines Windrades gelagert werden muss. Grundsätzlich sind die Lagerkränze dafür vorgesehen, hohe Lagerkräfte bei möglichst großer Standzeit aufnehmen zu können.

Bei vielen Anwendungen wird das Lager während des Betriebes nicht nur mit hohen Lasten beaufschlagt, sondern befindet sich gleichzeitig in einer Umgebung, die es erforderlich macht, das eigentliche Kranzlager gegen Verschmutzung und Eindringen von Fremdkörpern zu schützen. Hierbei ist sowohl eine Abdichtung gegen eindringende Flüssigkeiten, etwa Regenwasser, als auch eine Abdichtung gegen Fremdkörper, etwa Schmutz oder Staub, vorzusehen. Der bekannte Drehkranz weist hierzu im Bereich des Eintritts des Spaltes eine Labyrinthdichtung auf. Zusätzlich ist das Kranzlager und der Spalt mit einem Fett gefüllt, wobei über Schmiernippel im Rahmen der Wartung dieses Fett aus dem Spalt zum Zwecke der Reinigung herausgedrückt und durch neues Fett ersetzt werden kann.

Der Nachteil des bekannten Drehkranzes besteht darin, dass in vergleichsweise kurzen Intervallen Wartungsarbeiten erforderlich sind, wobei durch diese Wartungsarbeiten verunreinigtes Fett anfällt, das später aufwändig entsorgt werden muss.

### Darstellung der Erfindung

### Technische Aufgabe

Aufgabe der Erfindung ist es daher, einen Drehkranz zu schaffen, der eine möglichst geringe Wartungsanforderung und einen geringen Verschleiß der beanspruchten Bauteile aufweist.

### Technische Lösung

Diese Aufgabe wird nach der Erfindung dadurch gelöst, dass die erste Dichtung eine bidirektionale Dichtung sowohl gegen den Eintritt eines Fremdkörpers in den Lagerraum als auch gegen den Austritt eines Mediums, insbesondere eines Lagerfettes, aus dem Lagerraum umfasst. Ferner wird diese Aufgabe dadurch gelöst, dass die Dichtungen zumindest im Bereich der Berührungsflächen aus einem thermoplastischen Polyurethan gefertigt sind.

### Vorteilhafte Wirkungen

Durch die erfindungsgemäße Ausgestaltung der ersten und, soweit vorgesehen, auch der zweiten Dichtung, und durch die Anordnung der Bauteile des Drehkranzes kann nun zum einen sicher der Lagerraum vor dem Eindringen von Flüssigkeiten oder Fremdkörpern geschützt werden, andererseits der Lagerraum nach außen sicher abgeschirmt, so dass zum Beispiel das Lagerfett nicht entweichen kann, selbst wenn dieses in Folge höherer Temperatur eine niedrigere Viskosität aufweisen sollte. Durch die erfindungsgemäße Ausgestaltung kann eine weitgehende Wartungsfreiheit erreicht werden, so dass es in vielen Fällen möglich ist, dass die Wartungsintervalle die Lebensdauer des Drehkranzes erreichen, also eine 100 %ige Wartungsfreiheit erzielt werden kann.

Die Wartungsfreiheit wird dadurch erzielt, dass zum einen die Dichtung als bidirektionale Dichtung ausgebildet ist, so dass eine Verunreinigung des Lagerfettes und damit die Notwendigkeit eines Austausches lange Zeit vermieden werden kann. Gleichzeitig wird durch die Abdichtung in die Austrittsrichtung vermieden, dass das Lagerfett entweicht.

Ein weiterer Aspekt der Erfindung ist die Tatsache, dass die erste, die zweite oder beide Dichtungen durch die Formgebung des Ober- und des Unterringes vor mechanischen Beschädigungen geschützt werden. Gerade bei Verwendung im Kraftfahrzeugbereich oder in der Bauindustrie, wo häufig Schlamm oder sonstige aggressive Medien gegen die Dichtung geschleudert werden können, kann so vermieden werden, dass diese das flexible Material der Dichtung zerreibenden Medien in den Dichtungsbereich gelangen. Auch ein mechanischer Fremdeinfluss, der zur Zerstörung der Dichtung führen kann, kann so vermieden werden.

Eine beispielhafte Ausgestaltung des Drehkranzes weist daher einen Lagerraum auf, der zumindest abschnittsweise spaltförmig ausgebildet ist. Bevorzugt ist der Lagerraum mit Ausnahme des Bereichs des Kranzlagers vollständig spaltförmig, wobei die Spaltgröße in Abhängigkeit der benötigten Menge des Lagerfettes variieren kann. Bevorzugt wird der Spalt möglichst klein gehalten werden. Die erste und die zweite Dichtung können bei dieser Ausgestaltung in den spaltförmigen Abschnitten des Lagerraumes angeordnet werden. Dieser spaltförmige Abschnitt kann einen gleich bleibenden oder auch einen zu- oder abnehmenden Querschnitt aufweisen. Durch die Anordnung der ersten und der zweiten Dichtung in dem spaltförmigen Lagerraum wird diese beispielsweise durch den Oberring überdeckt, so dass Schlamm oder Steine nicht gegen die Dichtung geschleudert werden können. Gleichzeitig verhindert die Abdeckung der Dichtung, dass diese mit Flüssigkeiten oder möglicherweise auch das Material versprödenden Sonnenstrahlen in Kontakt kommt.

Die erste und die zweite Dichtung können weitere Dichtungsbereiche aufweisen, insbesondere kann eine Labyrinthdichtung am Eintritt des Lagerraumes vorgesehen sein, die weiter dafür Sorge trägt, dass Fremdkörper nicht eintreten können. Auch andere Möglichkeiten der Dichtung können hier vorgesehen werden, beispielsweise können je nach Verwendungszweck Bürsten vorgesehen sein, die vor der ersten und der zweiten Dichtung angeordnet werden und so ausgestaltet sein können, dass sie eintretenden Schmutz durch die Drehbewegung des Drehkranzes nach außen treiben.

Das Kranzlager kann jede Form eines Lagers einschließlich eines Gleitlagers oder eines Wälzlagers aufweisen. Bevorzugt wird das Kranzlager ein einreihiges oder mehrreihiges Wälzlager sein, wobei alle Formen von Wälzkörpern Verwendung finden können, auch Mischformen, so wie es bereits im Stand der Technik bekannt ist.

Weitere Merkmale und Vorteile der Erfindung ergeben sich aus den Unteransprüchen und aus der nachfolgenden Beschreibung bevorzugter Ausführungsbeispiele anhand der Zeichnungen.

### Kurze Beschreibung der Zeichnungen

In den Zeichnungen zeigt:

Fig. 1 eine erste Ausgestaltung der Erfindung in einer Schnittansicht,

Fig. 2 die Einzelheit Z aus Figur 1,

Fig. 3 eine weitere Ausgestaltung eines Drehkranzes in einer Schnittansicht und

Fig. 4 eine dritte Ausgestaltung eines Drehkranzes.

### Bester Weg zur Ausführung der Erfindung

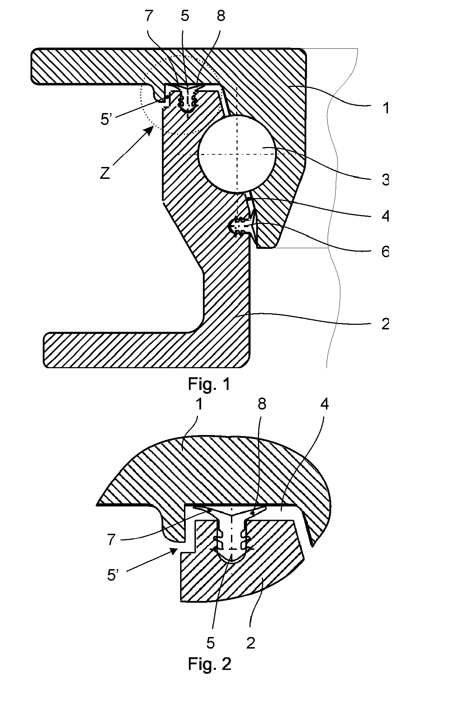

In Figur 1 ist ein Drehkranz dargestellt, der einen Oberring 1 und einen Unterring 2 aufweist. Das Kranzlager 3 ist hier von einem Wälzlager, das als Kugellager ausgebildet ist, gebildet. Dieses Kranzlager 3 ist in einem Lagerraum 4 aufgenommen, der mit Ausnahme der Aufnahme für die kugelförmigen Wälzkörper und den radialen Bereich zwischen diesen Wälzkörpern spaltförmig ausgebildet ist. Im Bereich des oberen Endes des Unterrings 2 ist der spaltförmige Lagerraum 4 seitlich nach links abgewinkelt, wobei im dann horizontal verlaufenden Bereich zwischen dem Oberring 1 und dem Unterring 2 die erste Dichtung 5 angeordnet ist. Natürlich kann auch jede andere Form von Lagergeometrien gewählt werden.

Die erste Dichtung 5 wird hier von zwei wesentlichen funktionellen Bauelementen gebildet. Zum einen ist dies eine Labyrinthdichtung 5'*, die dadurch hergestellt ist, dass der Oberring 1 vor dem Unterring 2 mit einer Nase nach unten hervorspringt, die den Eintritt des Spaltes des Lagerraumes 4 abdeckt. Zusätzlich weist der Unterring 2 im Bereich dieser vorspringenden Nase einen Einschnitt auf, so dass sich ein im Wesentlichen S-förmiger Eintrittsbereich für den Lagerraum 4 ergibt.

Das zweite Bauelement der Dichtung 5 wird von einer elastischen Dichtung gebildet, die umlaufend im Unterring 2 gelagert ist. Alternativ kan n diese Dichtung natürlich auch im Oberring 1 gelagert werden.

Der elastische Teil der Dichtung 5 ist als bidirektionale Dichtung ausgebildet, wobei dies dadurch realisiert wird, dass der elastische Bereich mit einem unteren Teil in eine Nut im Unterring 2 eingesteckt ist und der obere Teil eine erste Dichtlippe 7 und eine zweite Dichtlippe 8 aufweist, die sich gegen die Kontaktfläche des Oberrings 1 abstützen. Beide Dichtlippen sind in einem Winkel zur Kontaktfläche angestellt, wobei sich aus Sicht des Lagerraums 4 die erste Dichtlippe 7 nach außen erstreckt, während die zweite Dichtlippe 8 nach innen gerichtet ist. Im mittleren Teil der Dichtung 5 kann eine Vertiefung vorgesehen sein, die als Sammelrinne für dennoch eintretende Flüssigkeiten oder Staubpartikel dienen kann.

Bei einer aufwändigeren Gestaltung der Dichtung 5 kann die mittlere Sammelrinne auch über Abflusskanäle mit der Umgebung verbunden sein, so dass Staub und Flüssigkeiten aus diesem Sammelraum entweichen können. Die Dichtungen 5, 6 sind bevorzugt aus einem thermoplastischen Polyurethan gefertigt, wobei dieser Werkstoff nicht nur extrem verschleißfest ist und damit eine hohe Lebensdauer gewährleistet, sondern auch eine sehr hohe mechanische Festigkeit gegenüber Beschädigungen und chemischen Einwirkungen aufweist.

In Verbindung mit der besonderen Ausgestaltung der Dichtungen 5, 6 einerseits und der weiter unten beschriebenen speziellen Form des Oberrings 1 und des Unterrings 2 andererseits gewährleistet das Material der Dichtungen 5, 6 eine wesentliche Verlängerung der Wartungsintervalle. Die Verlängerung der Wartungsintervalle wird allerdings durch jeden einzelnen Aspekt der Erfindung erreicht, einmal die Auswahl des Materials der Dichtungen 5, 6, zum anderen die spezielle Formgebung der Dichtungen 5, 6 mit bidirektionaler Wirkung und zum Dritten die spezielle Formgebung des Drehkranzes an sich, der die Dichtungen 5, 6 vor mechanischen Beschädigungen schützt.

Zum Erreichen des letztgenannten Zieles sind daher bei der dargestellten Ausführungsform der Oberring 1 und der Unterring 2 derart gestaltet und miteinander verbunden, dass die erste Dichtung 5 und die zweite Dichtung 6 in dem spaltförmigen Bereich des Lagerraumes 4 angeordnet sind. Zusätzlich ist der obere Eintritt des Lagerraumes 4 über eine Labyrinthdichtung 5' mechanisch geschützt. Der obere Teil des Lagerraums 4 ist besonders gut in Figur 2, die die Einzelheit Z aus Figur 1 in vergrößerter Darstellung wiedergibt, ersichtlich.

Die Dichtlippen 7,8 der Dichtungen 5,6 sind so gestaltet, dass der infolge eines Verschleißes auftretende Einlaufeffekt lange Zeit kompensiert werden kann, die Dichtlippen 7,8 oder auch de Dichtungen also so flexibel geformt und ausgebildet sind, dass noch federnd gegen den Oberring 1 angestellt bleiben, also funktionstüchtig bleiben. Dieser Einlaufeffekt entsteht im Wesentlichen durch den Verschleiß des Lagers, wobei sind der Lagerraum 4 durch die Verringerung des Kugeldurchmessers und/oder Riefenbildung im Oberring 1 oder Unterring 2 verkleinert.

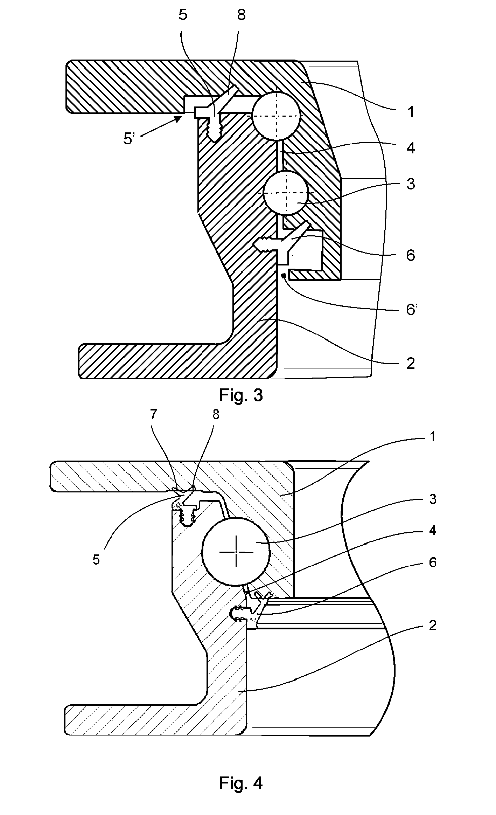

Erfindungsgemäß sind die Dichtungen 5, 6 so ausgebildet, dass diese Abstandsverringerung, die mehrere Millimeter betragen kann, von der elastischen Dichtung 5,6 kompensiert werden kann. Die hierfür erforderliche Elastizität ergibt sich einerseits aus dem gewählten Dichtungsmaterial und andererseits aus der besonderen Formgebung der Dichtungen 5,6 und des Oberrings 1 im Bereich der Kontaktfläche, wie sie insbesondere in Figur 4 dargestellt ist.

### Weg(e) zur Ausführung der Erfindung

Figur 3 zeigt eine weitere Ausgestaltung eines erfindungsgemäßen Drehkranzes. Diese Ausgestaltung weist auch im unteren Bereich eine Labyrinthdichtung 6' auf. Diese Labyrinthdichtung wird hier von dem Eintrittsspalt zwischen dem Oberring 1 und dem Unterring 2 sowie einem kleinen Raum seitlich neben der zweiten Dichtung 6 gebildet, so dass Medien, die die Dichtung 6 umgehend in den Lagerraum 4 eintreten könnten, zunächst durch diesen unteren Spalt dann die Dichtungen 5, 6 seitlich umgehend in den eigentlichen Lagerraum 4 eintreten müssten.

Auf ähnliche Weise ist bei dieser Ausführungsform der obere Teil des Lagerraums 4 über eine weitere Labyrinthdichtung 5' abgesichert. Als Dichtungen 5, 6 werden hier bekannte Dichtungen verwendet, die nur in eine Richtung eine erhöhte Dichtwirkung auf Grund der schrägen Anstellung der Dichtlippe 8 an die Kontaktfläche mit dem Oberring 1 aufweisen. In die entgegen gesetzte Richtung ist diese dargestellte Dichtung nur schwach abdichtend, so dass die in Figur 1 dargestellten Dichtungen 5, 6 für die Realisierung der Erfindung bevorzugt werden. In Verbindung mit dem thermoplastischen Polyurethan kann aber auch mit der weniger geeigneten Dichtungsform eine spürbare Verlängerung der Wartungsintervalle erreicht werden.

Wie die bekannten Drehkränze weisen auch die erfindungsgemäßen Drehkränze zumindest einen Schmiernippel auf, durch den der Lagerraum 4 mit Fett gefüllt werden kann. Obwohl dieses Merkmal an sich auf Grund der Wartungsfreiheit, sofern die Wartungsintervalle die Lebensdauer des Drehkranzes übersteigen, nicht notwendig wäre, erleichtert eine solche externe Schmiermöglichkeit doch das Befüllen des Lagerraumes 4 mit Lagerfett, was ansonsten nur während der Montage unter Herausdrücken überschüssigen Lagerfettes aus dem Lageraum 4 bei Aufsetzen des Oberrings 1 auf den Unterring 2 erreicht werden kann.

Muss dagegen der Lagerraum 4 nicht vollständig mit Lagerfett gefüllt sein, könnte auf eine externe Schmierung verzichtet werden. Dies nimmt allerdings dem Wartungspersonal die Möglichkeit, eventuell trotz aller Vorsichtsmaßnahmen eindringenden Schmutz ohne Demontage des Drehkranzes entfernen zu können.

In den dargestellten Ausführungsformen sind die Dichtungen jeweils im nicht montierten Zustand gezeigt, um die Grundform des Dichtungselements darstellen zu können. Selbstverständlich werden die Dichtungen 5, 6 in Figur 3 durch die Montage des Oberrings 1 auf den Unterring 2 herunter gedrückt. Die Kontaktfläche des Oberrings 1 ist dabei eine ebene Fläche, so dass sich eine Flächenberührung zwischen der Dichtung 5 bzw. 6 und dem Oberring 1 ergibt.

Als erfindungswesentlich werden grundsätzlich drei Komplexe angesehen, einmal die Ausgestaltung der Dichtungen 5, 6 als bidirektionale Dichtung, zum anderen die Überdeckung des Dichtungsbereichs im Bereich der oberen Dichtung 5 und der unteren Dichtung 6 durch die spezielle Geometrie des Oberrings 1 und des Unterrings 2, so dass beide Dichtungen 5, 6 vor mechanischer Beschädigung geschützt sind, wozu auch optionale Labyrinthdichtungen 5' und 6' beitragen können, und zum Dritten die Verwendung des Werkstoffes thermoplastischer Polyurethan zur Herstellung zumindest des stark belasteten elastischen Bereichs der Dichtung 5 oder 6.

Jeder einzelne der drei Komplexe kann ohne Mitwirkung der jeweils anderen Komplexe zu einer Verlängerung der Wartungsintervalle beitragen. Daher werden alle drei Komplexe zunächst unabhängig voneinander als erfindungswesentlich angesehen, allerdings wird das Zusammenspiel aller drei Maßnahmen zu einer erheblichen Verlängerung der Wartungsintervalle führen.

In Figur 4 ist eine weitere Ausgestaltung der Erfindung gezeigt, die sich von der zuvor beschriebenen im Wesentlichen dadurch unterscheidet, dass sich der Spalt vor der Dichtung 5 im oberen Teil des Drehkranzes etwas erweitert, um so eine Vergrößerung des Lagerraums 4 unmittelbar vor der Dichtung 5 zu schaffen. Dies hat den weiteren Vorteil, dass trotz aller Vorkehrungen eindringende Schmutzpartikel hier gesammelt werden nicht in den engeren Spalt eindringen.

Der Oberring 1 ist im Bereich der ersten Dichtung 5 mit einer ebenen Vertiefung versehen, wobei sich die Dichtlippen 7,8 im Grund dieser Vertiefung auf der ebenen Fläche abstützen. Dies hat den Vorteil, dass die Dichtlippen 7,8 versenkt angeordnet sind und in den Spalt eindringende Fremdkörper nicht so leicht den vorderen Bereich der ersten Dichtlippe 7 angreifen können und das im Lagerraum 4 befindliche Fett eher von unten gegen die zweite Dichtlippe 8, diese gegen den Oberring 1 drückend angepresst wird. In beiden Fällen wird also die seitliche Angriffsfläche der Dichtlippen 7,8 verringert bzw. abgedeckt.

Durch die spezielle Form der Dichtung 5,6, die seitlich an einem im Unterring 2 eingelassenen Dichtungsteil mit einem schräg nach oben (im Falle der Dichtung 5) bzw. zur Seite (im Falle der Dichtung 6) hervorspringenden Hauptast versehen sind, der sich dann in die beiden, sich in unterschiedliche Richtungen erstreckenden Dichtlippen 7,8 aufteilt, ist eine gute Verformungsmöglichkeit der Dichtung 5,6 zur Kompensation des Einlaufens des Lagers gewährleistet, ohne dass die Dichtwirkung nachlässt. So können die Dichtungen 5,6 scherengitterartig zusammengelegt werden, wobei jedoch die Anstellkraft und auch die Elastizität der Dichtlippen 7,8 relativ zum weiteren Bereich der Dichtungen 5,6 weitgehend erhalten bleibt.

Bezugszeichenliste:

1 Oberring

2 Unterring

3 Kranzlager

4 Lagerraum

5 Erste Dichtung

5' Grobdichtung der ersten Dichtung

6 Zweite Dichtung

6' Grobdichtung der zweiten Dichtung

7 Erste Dichtlippe

8 Zweite Dichtlippe

## Patentansprüche

1. Drehkranz mit verminderter Wartungsanforderung, der einen Unterring (2) und einen über ein Kranzlager (3) auf dem Unterring (2) gelagerten Oberring (1) aufweist, wobei das Kranzlager (3) in einem Lagerraum (4) angeordnet ist, der zumindest über eine erste Dichtung (5) und eine zweite Dichtung (6) gegen die Umgebung abgedichtet ist, **dadurch gekennzeichnet, dass** die erste Dichtung (5) eine bidirektionale Dichtung sowohl gegen den Eintritt eines Mediums, insbesondere eines Fremdkörpers oder einer Flüssigkeit in den Lagerraum (4) als auch gegen den Austritt eines Mediums, insbesondere eines Lagerfettes, aus dem Lagerraum (4) umfasst.

2. Drehkranz mit verminderter Wartungsanforderung nach Anspruch 1, **dadurch gekennzeichnet, dass** die zweite Dichtung (6) eine bidirektionale Dichtung gegen den Eintritt eines Fremdkörpers in den Lagerraum (4) und gegen den Austritt eines Mediums, insbesondere eines Lagerfettes, aus dem Lagerraum (4) umfasst.

3. Drehkranz mit verminderter Wartungsanforderung nach einem der beiden vorhergehenden Ansprüche, **dadurch gekennzeichnet, dass** die erste Dichtung (5) und/oder die zweite Dichtung (6) eine zusätzliche Grobabdichtung (5',6'), insbesondere eine Labyrinthdichtung umfasst, die in Eintrittsrichtung des Lagerraums (4) vor der ersten Dichtung (5) oder der zweiten Dichtung (6) angeordnet ist.

4. Drehkranz mit verminderter Wartungsanforderung nach einem der vorhergehenden Ansprüche, **dadurch gekennzeichnet, dass** das Kranzlager (3) ein einreihiges oder mehrreihiges Wälzlager ist.

5. Drehkranz mit verminderter Wartungsanforderung nach einem der vorhergehenden Ansprüche, **dadurch gekennzeichnet, dass** die erste Dichtung (5) und/oder die zweite Dichtung (6) eine Lippendichtung ist, die mit einem unteren Rand in eine Nut in einem der Ringe, dem Unterring (2) oder dem Oberring (1), eingesetzt ist und zwei, gegen den gegenüberliegenden Ring, den Oberring (1) oder den Unterring (2), gegen eine Kontaktfläche angestellte elastische Dichtlippen (7,8) aufweist, wobei eine erste Dichtlippe (7) aus Sicht der Eintrittsrichtung in den Lagerraum (4) nach außen in Richtung der Kontaktfläche hervorspringt und eine zweite Dichtlippe (8) aus Sicht der Eintrittsrichtung in den Lagerraum (4) nach innen hervorspringt.

6. Drehkranz mit verminderter Wartungsanforderung nach einem der vorhergehenden Ansprüche, **dadurch gekennzeichnet, dass** der Lagerraum (4) oberhalb des Kranzlagers (3) zumindest abschnittsweise als Spalt mit gleich bleibender oder veränderlicher Spaltbreite ausgebildet ist und die erste Dichtung (5) im Bereich des Spaltes angeordnet ist oder den Spalt abschließt.

7. Drehkranz mit verminderter Wartungsanforderung nach einem der vorhergehenden Ansprüche, **dadurch gekennzeichnet, dass** der Lagerraum (4) unterhalb des Kranzlagers (3) zumindest abschnittsweise als Spalt mit gleich bleibender oder veränderlicher Spaltbreite ausgebildet ist und die zweite Dichtung (5) im Bereich des Spaltes angeordnet ist.

8. Drehkranz mit verminderter Wartungsanforderung nach einem der beiden vorhergehenden Ansprüche, **dadurch gekennzeichnet, dass** der Spalt den vollständigen Teil des Lagerraums (4) außerhalb des Kranzlagers (3) bildet und eine Breite zwischen 5 mm und 60 mm, insbesondere zwischen 10 mm und 20 mm aufweist.

9. Drehkranz mit verminderter Wartungsanforderung insbesondere nach einem der vorhergehenden Ansprüche, **dadurch gekennzeichnet, dass** der elastische Bereich der ersten Dichtung (5) und/oder der zweiten Dichtung (6) zumindest im Bereich der Berührung mit den Kontaktflächen aus einem thermoplastischen Polyurethan gefertigt ist.

10. Drehkranz mit verminderter Wartungsanforderung nach einem der vorhergehenden Ansprüche, **dadurch gekennzeichnet, dass** der zumindest eine der Dichtungen (5 oder 6) einen seitlich an einem im Unterring (2) eingelassenen Dichtungsteil befestigten und im einem Winkel zwischen 10° und 80° schräg von diesem nach hervorspringenden Hauptast aufweisen, wobei die Dichtlippen (7 oder 8) an dem Ende des Hauptastes angeordnet sind, so dass die Dichtung (5 oder 6) bei Verringerung des Abstandes zwischen Oberring (1) und Unterring (2) durch Umbiegen des Hauptastes und Auseinanderbiegen der Dichtlippen (7,8) in unterschiedliche Richtungen zusammendrückbar sind.
